# EUROPÄISCHE PATENTSCHRIFT

(11) **EP 1 766 259 B1**
(45) Veröffentlichungstag und Bekanntmachung des Hinweises auf die Patenterteilung: **09.12.2009**
(21) Anmeldenummer: 05766889.9
(22) Anmeldetag: 30.06.2005
(51) Int. Cl.: F16D 65/18

(54) **SCHEIBENBREMSE FÜR FAHRZEUGE MIT EINER ZUSPANNEINRICHTUNG MIT EINEM NADELLAGER**
DISK BRAKE FOR VEHICLES WITH A CLAMPING DEVICE HAVING A NEEDLE BEARING
FREIN A DISQUE POUR VEHICULES COMPRENANT UN DISPOSITIF DE SERRAGE MUNI D'UN ROULEMENT A AIGUILLES

(30) Priorität: 01.07.2004 DE 102004031792
(43) Veröffentlichungstag der Anmeldung: 28.03.2007
(73) Patentinhaber: KNORR-BREMSE Systeme für Nutzfahrzeuge GmbH, 80809 München (DE)
(72) Erfinder: BIRKENEDER, Franz-Josef, 94501 Aldersbach (DE)
(74) Vertreter: Mattusch, Gundula
(86) Internationale Anmeldenummer: PCT/EP2005/007025
(87) Internationale Veröffentlichungsnummer: WO 2006/002905

(56) Entgegenhaltungen:
- DE-A1- 3 411 745
- DE-A1- 19 542 876
- US-A- 5 433 298
- PATENT ABSTRACTS OF JAPAN Bd. 1996, Nr. 02, 29. Februar 1996 (1996-02-29) & JP 07 269573 A (NTN CORP), 17. Oktober 1995 (1995-10-17)

## Beschreibung

Die Erfindung betrifft eine Scheibenbremse für Fahrzeuge, insbesondere eine pneumatisch betätigte Scheibenbremse für Nutzfahrzeuge, nach dem Oberbegriff des Anspruchs 1

Gattungsgemäße Scheibenbremsen sind in verschiedenen Ausführungsformen bekannt, so unter den Produktbezeichnungen SB6 und SB7 sowie SN6 und SN7 von der Anmelderin dieses Schutzrechtes. Die Erfindung eignet sich insbesondere für einen Einsatz bei derartigen Bremsen, ist aber prinzipiell auch bei anderen Typen von Scheibenbremsen geeignet, bei denen die Lagerung eines ersten beweglichen Bremsenbauteils, insbesondere eines exzentrisch zu lagernden Drehhebels, an einem weiteren Bremsenbauteil mittels eines kreisbogenförmigen Nadellagers erfolgt. Dabei werden mit Außenring und Innenring nicht geschlossene Ringe bezeichnet sondern Bauelemente, welche sich bogenförmig über einen Teil eines Kreises erstrecken.

Zur Lagerung relativ zueinander beweglicher Bremsenteile haben sich Nadel- bzw. Rollenlager mit einem Außenring, einem Innenring und einen Satz von Lagernadeln an sich bewährt.

Eine gattungsgemäße Scheibenbremse ist aus der US 5 433 298 A bekannt. In der DE 195 42 876 A1 hingegen ist ein Wälzlager geoffenbart, dessen Außenring außenseitige, umlaufende und sich radial nach innen erstreckende Kragen aufweist, die als Käfigwandung fungieren und den Lagerkäfig axial sichern.

Optimierungsbedarf wird insbesondere hinsichtlich des relativ hohen Kostenaufwands zur Herstellung derartiger Nadellager gesehen.

Die Erfindung hat die Aufgabe, dieses Problem zu lösen.

Die Erfindung löst diese Aufgabe durch den Gegenstand des Anspruchs 1.

Danach ist der Innenring als Lagerkäfig aus Kunststoff ausgestaltet, welcher einen "ebenen" Blechring als Außenlage u-förmig umgreift. Da der Außenring aus einem Metallblech besteht, das bis auf Funktionselemente wie Nasen oder dgl. in einem einzigen Biegeprozess auf einfache Weise herstellbar ist und da die Aufgabe der seitlichen Käfigwandungen der Innenring aus Kunststoff übernimmt, der auf kostengünstige Weise z.B. als Spritzgussteil herstellbar ist, können die Kosten zur Herstellung des Nadellagers und damit die Kosten zur Herstellung der Scheibenbremse bei dennoch zumindest gegenüber dem Stand der Technik gleichbleibender oder sogar verbesserter Funktion gesenkt werden. Nach dem Stand der Technik war demgegenüber der Außenring als Blechbogen mit zwei seitlichen Käfigwandungen gefertigt, die an dem einzusetzenden sehr harten Metallblech nur mittels aufwendiger und teuerer Herstellvorgänge angebracht werden konnten. Entgegenvorheriger Erwartung ist es dagegen möglich, die Aufgabe der seitlichen Käfigbegrenzung auf den Innenring aus Kunststoff zu verlagern.

Vorteilhafte Ausgestaltungen sind den Unteransprüchen zu entnehmen.

Nachfolgend wird die Erfindung anhand eines Ausführungsbeispiels unter Bezug auf die Zeichnung näher beschrieben. Es zeigt:
- Fig. 1a-e: verschiedene Ansichten eines erfindungsgemäßen Nadellagers; und
- Fig. 2a-b: eine perspektivische und eine teilgeschnittene Ansicht eines Innenrings des Nadellagers aus Fig. 1
- Fig. 3: eine perspektivische Ansicht des Außenrings des Nadellagers aus Fig. 1.

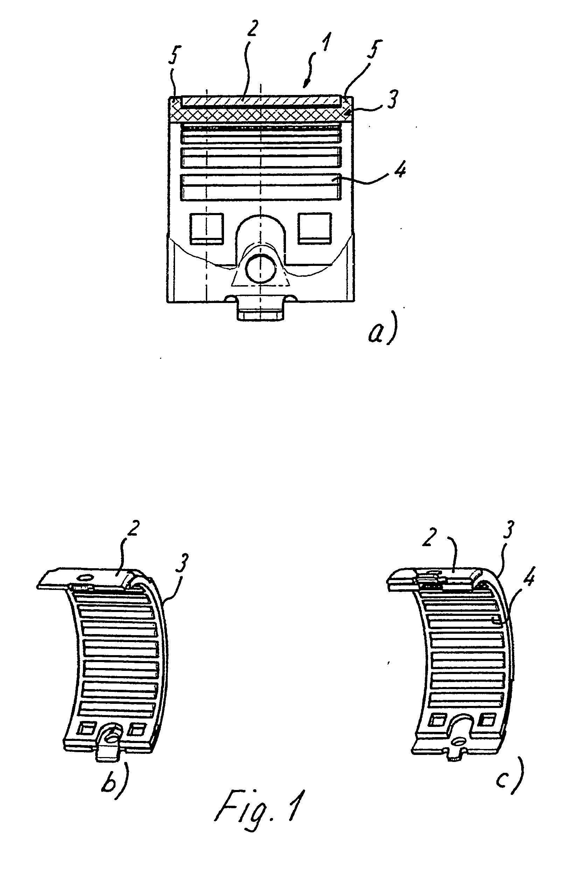

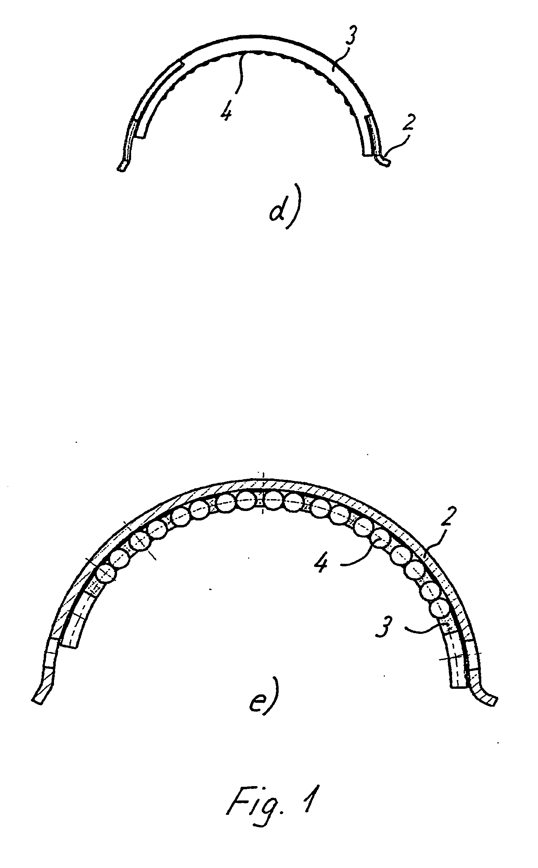

Fig. 1 zeigt ein Nadellager 1 für eine hier ansonsten nicht dargestellte Scheibenbremse, das insbesondere zur Lagerung des Drehhebels z.B. am Bremssattel einer Scheibenbremse einsetzbar ist, wie sie z.B. unter den Produktbezeichnungen SN6 oder SN 7 oder aber in ähnlicher Bauart z.B. aus der DE 4204307 A (siehe dort das Rollenlager 3) oder der DE 197 31 696 A bekannt ist.

Das in Fig. 1 dargestellte Nadel- bzw. Rollenlager 1 weist einen kreisbogenförmigen Außenring 2 und einen zugehörigen Innenring 3 auf, zwischen denen ein Satz von Lagernadeln 4 angeordnet ist, derart, dass der Außenring 2 relativ zum Innenring 3 beweglich rollengelagert ist.

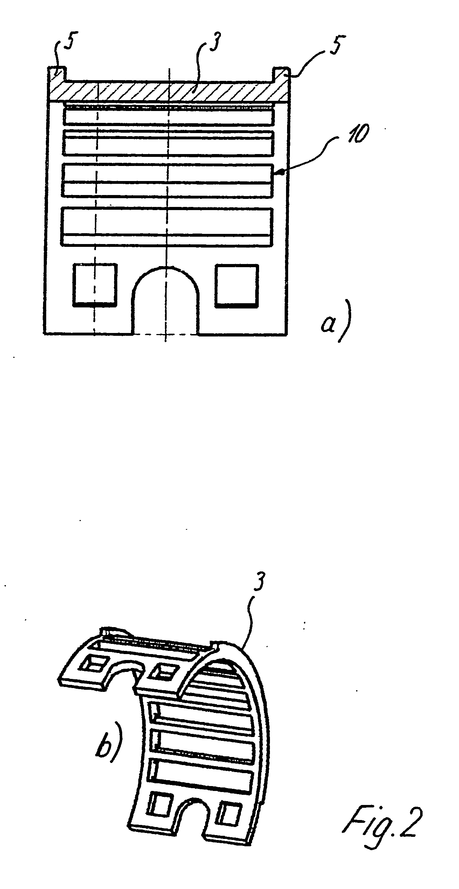

Der Innenring 3 besteht aus Kunststoff und ist mit zwei senkrecht zum Innenring nach außen ausgerichteten seitlichen Käfigwandungen 5 - siehe auch Fig. 2 - versehen, welche sich in Richtung des Außenrings 2 erstrecken und diesen seitlich u-förmig einfassen.

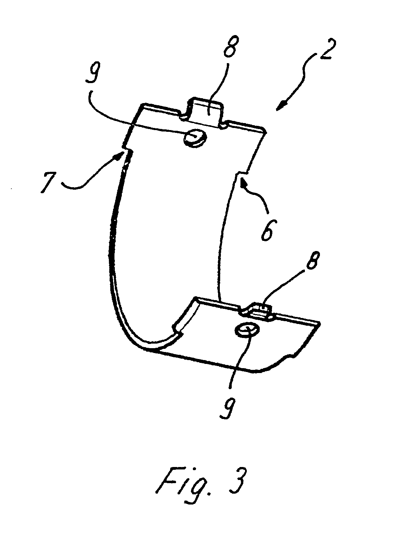

Der Außenring 2 - siehe auch Fig. 3 - ist aus einem ebenen Metallblech gefertigt, welches zu einem Zylinderabschnitt bzw. in eine Kreisbogenform gebogen wurde. Er weist an seinen Seiten zwei seitliche Aussparungen 6, 7 auf, in welche die Käfigwandungen 5 des Innenringes eingreifen, wobei die Aussparungen 6, 7 eine derartige Erstreckung aufweisen, dass der Innenring in den Aussparungen des Außenrings 2 begrenzt beweglich geführt ist, so dass die Aussparungen 6, 7 einerseits in einfacher Weise die Funktion von bewegungsbegrenzenden Anschlägen übernehmen und andererseits den Außenring 2 am Innenring 3 gut führten und in der Einbausituation halten.

Befestigungseinrichtungen wie Nasen 8 und/oder Bohrungen 9 fixieren den Innenring 3 und/oder den Außenring 2 an den jeweils zugehörigen relativ zueinander beweglich zu lagernden Bauteilen wie dem Bremssattel und dem Drehhebel der Scheibenbremse (hier nicht dargestellt).

Der Innenring 3 aus Kunststoff weist mehrere aussparungsartige Kammern 10 zur Aufnahme von je zwei der Lagernadeln 4 auf. Der Außenring 2 aus Blech besteht dagegen aus einem Metallblech, das bis auf die Nasen 9 nur in einem einzigen Biegeprozess auf einfache Weise herstellbar ist, so dass das erfindungsgemäße Nadellager ohne jede Funktionsbeeinträchtigung deutlich kostengünstiger herstellbar ist als das bekannte Nadellager.

### Bezugszeichen

- Nadellager: 1
- Außenring: 2
- Innenring: 3
- Lagernadeln: 4
- Käfigwandungen: 5
- Aussparungen: 6, 7
- Nasen: 8
- Bohrungen: 9
- Kammern: 10

## Patentansprüche

1. Scheibenbremse für Fahrzeuge, insbesondere pneumatisch betätigte Scheibenbremse für Nutzfahrzeuge, mit
a) einem Bremssattel und
b) einer im Bremssattel angeordneten Zuspanneinrichtung zum Zuspannen der Bremse,
c) wobei die Zuspanneinrichtung ein erstes Bauteil, vorzugsweise einen Drehhebel, aufweist, das mittels eines Nadellagers (1) mit einem Satz von Lagernadeln (4), einem Außenring (2) und einem als Lagerkäfig ausgebildeten Innenring (3) an einem zweiten Bauteil wie dem Bremssattel beweglich gelagert ist,
d) wobei der Außenring (2) und der Innenring (3) eine kreisbogenabschnittsförmige Geometrie aufweisen,
**dadurch gekennzeichnet, dass**
e) der als Lagerkäfig ausgestaltete Innenring (3) aus Kunststoff besteht und den aus Metallblech bestehenden Außenring (2) als Außenlager U-förmig umgreift.

2. Scheibenbremse nach Anspruch 1, **dadurch gekennzeichnet, dass** der Innenring (3) mit zwei senkrecht zum Innenring nach außen ausgerichteten seitlichen Käfigwandungen (5) versehen ist, welche sich in Richtung des Außenrings (2) erstrecken und diesen seitlich einfassen.

3. Scheibenbremse nach Anspruch 1 oder 2, **dadurch gekennzeichnet, dass** der Außenring (2) aus einem ebenen Metallblech gefertigt ist, welches in eine Kreisbogenform gebogen ist.

4. Scheibenbremse nach einem der vorstehenden Ansprüche, **dadurch gekennzeichnet, dass** der Außenring (2) an zwei gegenüberliegenden Seiten seitliche Aussparungen (6, 7) aufweist, in welche die Käfigwandungen (5) des Innenringes (3) eingreifen,

5. Scheibenbremse nach Anspruch 4, **dadurch gekennzeichnet, dass** die Aussparungen (6, 7) eine derartige Erstreckung aufweisen, dass der Innenring in den Aussparungen des Außenrings (2) begrenzt beweglich geführt ist, so dass die Aussparungen (6, 7) die Funktion von bewegungsbegrenzenden Anschlägen übernehmen

## Claims

1. Disc brake for vehicles, in particular a pneumatically actuated disc brake for commercial vehicles, having
a) a brake caliper and
b) an application device arranged in the brake caliper for applying the brake,
c) wherein the application device has a first component, preferably a rotary lever, which is mounted in a moveable fashion on a second component, such as the brake caliper, by means of a needle bearing (1) having a set of bearing needles (4), an outer ring (2) and an inner ring (3) formed as a bearing cage,
d) wherein the outer ring (2) and the inner ring (3) have the geometry of a section of a circular arc,
**characterised in that**
e) the inner ring (3) formed as a bearing cage is made from plastics and engages in a U-shaped fashion around the outer ring consisting of sheet metal as an outer bearing.

2. Disc brake according to claim 1, **characterised in that** the inner ring (3) is provided with two lateral cage walls (5) which are aligned outward perpendicular to the inner ring, which extent in the direction of the outer ring (2) and laterally border the latter.

3. Disc brake according to claim 1 or 2, **characterised in that** the outer ring (2) is produced from a planar metal sheet which is bent into the shape of a circular arc.

4. Disc brake according to one of the preceding claims, **characterised in that** the outer ring (2) has lateral cut-outs (6, 7) at two opposite sides, with which the cage walls (5) of the inner ring (3) engage.

5. Disc brake according to claim 4, **characterised in that** the cut-outs (6, 7) extend in such a manner that the inner ring is guided in the cut-outs of the outer ring (2) so as to be moveable to a limited extent, so that the cut-outs (6, 7) assume the function of movement-limiting stops.

## Revendications

1. Frein à disque pour des véhicules, notamment frein à disque à actionnement pneumatique pour des véhicules utilitaires, comprenant
a) un étrier de frein et
b) un dispositif de serrage du frein monté dans l'étrier de frein,
c) dans lequel le dispositif de serrage a un premier élément, de préférence un levier tournant, qui est monté mobile, au moyen d'un roulement (1) à aiguilles ayant un jeu d'aiguilles (4) de roulement, un anneau (2) extérieur et un anneau (3) intérieur constitué en cage de roulement, sur un deuxième élément, comme l'étrier de frein,
d) dans lequel l'anneau (2) extérieur et l'anneau (3) intérieur ont une géométrie en forme de segment d'arc de cercle,
**caractérisé en ce que**
e) l'anneau (3) intérieur conformé en cage de roulement est en matière plastique et entoure en forme de U l'anneau (2) extérieur en tôle de métal en tant que palier extérieur.

2. Frein à disque suivant la revendication 1, **caractérisé en ce que** l'anneau (3) intérieur est pourvu de deux parois (5) de cage latérales, qui sont dirigées vers l'extérieur perpendiculairement à l'anneau intérieur qui s'étendent en direction de l'anneau (2) extérieur et qui l'enchâssent latéralement.

3. Frein à disque suivant la revendication 1 ou 2, **caractérisé en ce que** l'anneau (2) extérieur est en une tôle plane en métal, qui est courbée à la forme d'un arc de cercle.

4. Frein à disque suivant l'une des revendications précédentes, **caractérisé en ce que** l'anneau (2) extérieur a sur deux côtés opposés des évidements (6, 7) latéraux dans lesquels pénètrent les parois (5) de cage de l'anneau (3) intérieur.

5. Frein à disque suivant la revendication 4, **caractérisé en ce que** les évidements (6, 7) ont une étendue telle que l'anneau intérieur est guidé, en étant mobile de façon limitée, dans les évidements de l'anneau (2) extérieur de sorte que les évidements (6, 7) assument la fonction de butées de limitation du déplacement.
